# EUROPEAN PATENT SPECIFICATION

(11) **EP 2 095 987 B1**
(45) Date of publication and mention of the grant of the patent: **26.01.2011**
(21) Application number: 09153482.6
(22) Date of filing: 24.02.2009
(51) Int. Cl.: B60K 17/10, B60K 17/354, B60K 17/356, B66C 23/36, B66C 23/84, E02F 9/02

(54) **Power transmission apparatus of working vehicle**
Kraftübertragungsvorrichtung für ein Arbeitsfahrzeug
Appareil de transmission de puissance pour véhicule de travail

(30) Priority: 26.02.2008 JP 2008043711
(43) Date of publication of application: 02.09.2009
(73) Proprietor: Kobelco Cranes Co., Ltd., Shinagawa-ku Tokyo 141-8626 (JP)
(72) Inventor: Hanamoto, Takahiro, Akashi-shi Hyogo 674-0063 (JP)
(74) Representative: TBK-Patent

(56) References cited:
- EP-A- 0 611 725
- EP-A- 1 544 440
- EP-A- 1 764 338
- WO-A-2007/052692
- GB-A- 2 066 430
- JP-A- 61 018 524
- JP-U- 57 101 623
- US-A- 3 637 036
- US-A- 4 189 021
- US-A- 6 003 313

## Description

### BACKGROUND OF INVENTION

### 1. Field of the Invention

The present invention relates to a power transmission apparatus of a working vehicle such as a wheel crane. Especially, it relates to the power transmission apparatus of the working vehicle which has a plurality of axles driven by hydraulic motors beneath a lower propelling body.

### 2. Description of the Related Art

Generally, in the working vehicle such as a wheel crane, an upper revolving body is rotatably mounted by means of a slewing ring gear on the lower propelling body which is provided with more than two axles where two or four wheels are mounted respectively. On the upper revolving body, a working device, such as a crane, and an operator cab are installed.

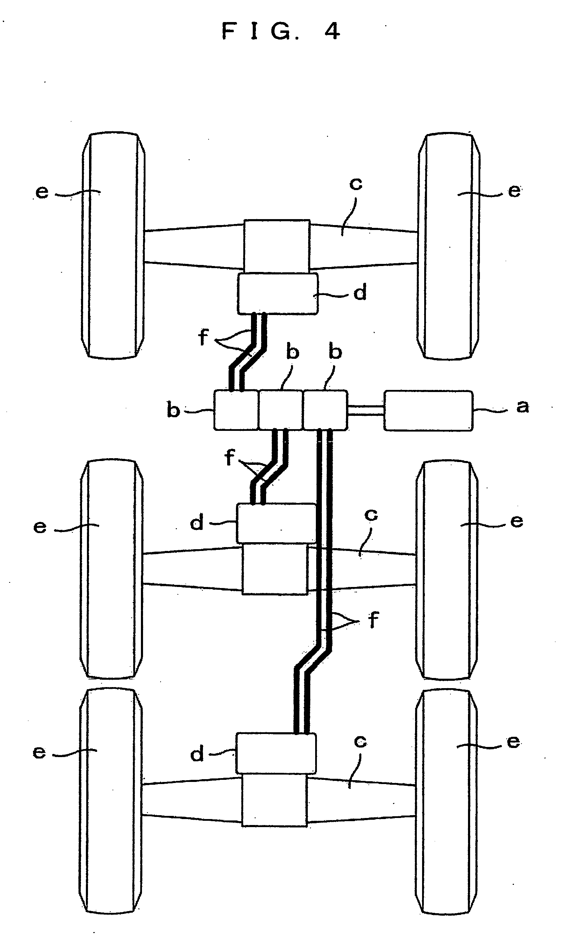

With regard to the power transmission apparatus like this, an apparatus shown in EP 1764338 A (Japanese Patent Laid Open No.2007-85405 A) is known for example. An example of the conventional technology is shown in Fig. 4. In Fig. 4, on an upper revolving body, an engine "a" and three hydraulic pumps "b" driven by the engine "a" are provided. On each axle "c" on the lower propelling body, hydraulic motors "d" that convert hydraulic pressures into torques are provided for the corresponding each axle respectively. The torques of the hydraulic motors "d" are transmitted to the wheels "e" on each drive axle "c", and the working vehicle is driven. On a rotation center of the upper revolving body, a swivel joint is installed. Both hydraulic hoses "f" and electric cables of a control system for the hydraulic motors "d" are passed inside this swivel joint, and the hydraulic hoses "f" connect the hydraulic pumps "b" located on the upper revolving body and the hydraulic motors "d" located on the lower propelling body.

However, as the axles "c" are mounted on the lower propelling body by means of suspension devices, both the hydraulic hoses "f" and the electric cables are bent frequently in response to extension movements of the suspension devices. In the aforementioned conventional technology, there is a problem that this frequent bending is apt to cause the hydraulic hoses to burst and the electric cables to break.

Document US 6 003 313 A discloses a power transmission apparatus of a working vehicle, comprising a lower propelling body, an engine, a hydraulic pump driven by the engine, a swivel joint, a hydraulic motor, and a torque transmission mechanism. The hydraulic motor is disposed directly under the swivel.

Document US 3 637 036 A discloses a power transmission apparatus of a working vehicle, comprising two motors and respective gearing and torque transmission mechanisms provided in the front part and in the back part of the vehicle, respectively.

Document JP 57 101 623 U discloses a power transmission apparatus of a working vehicle, comprising several gearboxes installed behind each other in the longitudinal direction.

Document JP 61 018 524 A discloses a power transmission apparatus of a working vehicle comprising the features of the preamble of claim 1.

### SUMMARY OF THE INVENTION

An object of the present invention is to provide a power transmission apparatus for a working vehicle that prevents hydraulic hoses from bursting and electric cables from breaking, when a plurality of axles on the lower propelling body of the working vehicle are driven by hydraulic motors.

This object is solved by an apparatus comprising the features of claim 1. Advantageous further developments are subject matter of the further claims.

The power transmission apparatus of a working vehicle of the present invention comprises a lower propelling body having at least two axles on which at least four wheels are mounted, and an upper revolving body rotatably mounted on the lower propelling body. On the upper revolving body, an engine and a hydraulic pump driven by the engine are provided. In the meantime, on the lower propelling body, at least one hydraulic motor that converts hydraulic pressure from the pump to torque is mounted. On a center of rotation of the upper revolving body, a swivel joint is installed. The hydraulic motor is disposed near the swivel joint of the lower propelling body on a top view. A torque transmission mechanism that transmits torque from the hydraulic motor to the axle is disposed along a front and rear line of the lower propelling body.

In this invention, the torque from the hydraulic motor located near the swivel joint of the lower propelling body, on the top view, is transmitted to the axles by means of the torque transmission mechanism disposed along the front and rear line of the lower propelling body. Consequently, the wheels on the axles are driven to rotate respectively, so the lower propelling body is propelled. In this case, as the hydraulic motors, which are heavy, are located near the swivel joint, that is to say, as is the hydraulic motors are located near a center of the vehicle, yaw moment of the lower propelling body or the working vehicle when it is in a steering motion becomes small, so that steering characteristics of the working vehicle is improved.

Furthermore, in case of connecting hydraulic pumps on the upper revolving body to the hydraulic motors on the lower propelling body by hydraulic hoses, or in case of connecting electric cables to a control panel on the upper revolving body, as the hydraulic motors are located near the swivel joint on the lower propelling body on the top view, the lengths of the hydraulic hoses and electric cables can be shortened as for as possible. In addition, as the hydraulic motors are mounted on the lower propelling body, being different from the conventional case in which hydraulic motors are mounted on the axles, the hydraulic hoses and the electric cables connected to the motors do not suffer from frequent bending motions caused by extension movements of suspension devices. Therefore, it is sure to prevent the hydraulic hoses from bursting and the electric control cables from breaking.

A preferred embodiment of claim 2 of the present invention is explained hereinafter. In this embodiment, the torques of plural hydraulic motors are compounded by one of two gearboxes. The compounded torque is outputted from the gearbox. The torque transmission mechanism is composed of a first torque transmission mechanism that transmits the torque from an output shaft on the one gearbox to the front axle and a second torque transmission mechanism that transmits the torque from an output shaft on another gearbox to the rear axle. In this embodiment, as the front axle and the rear axle are driven by the torques transmitted from the respective hydraulic motors, the gearboxes and the torque transmission mechanisms, so that each axle and wheel are driven properly

Another preferred embodiment of claim 3 of the present invention is explained hereinafter. In this embodiment, the present invention is applied to a working vehicle with three drive axles. A lower propelling body is provided with one front axle with at least two front wheels on its left and right sides, and also provided with two rear axles having at least two rear wheels on its left and right hand sides, in total at least four wheels. The second torque transmission mechanism is provided with a differential gear that distributes the torque to the respective two rear axles. In this embodiment, as the torque of the hydraulic motors for the rear axle is distributed to the two rear axles by means of the differential gear of the second torque transmission mechanism, driving both axles can be performed properly. That is to say, multi-axle driving is performed efficiently.

Furthermore, another preferred embodiment of claim 4 of the present invention is explained hereinafter. In this embodiment, a plurality of hydraulic motors and two gearboxes are disposed between the axle for the front wheels and the axles for the rear wheels respectively. In this embodiment, as a plurality of hydraulic motors and two gearboxes are located respectively in a relatively roomy space between the front wheel axle and the rear wheel axles, the placement and installation of these devices are easily facilitated, and this embodiment also contributes to shortening an overall length of the lower propelling body.

Furthermore, another preferred embodiment of claim 5 of the present invention is explained hereinafter. In this embodiment, two gearboxes are disposed near the front portion of the swivel joint of the lower propelling body, and they are located in parallel to a width direction of the lower propelling body. The first torque transmission mechanism is provided with the first propelling shaft that extends almost along a front-rear center line of the lower propelling body on the top view. The second torque transmission mechanism is provided with a second propelling shaft that is located at a certain distance off the center line of the lower propelling body on the top view, and extends along the front-rear center line and is located near a side portion of the swivel joint. In this embodiment, as two gearboxes are disposed in the relatively roomy space in the middle of the front wheel axle and the rear wheel axles and located in parallel near the front portion of the swivel joint, placement and installation of both gearboxes are facilitated, and this embodiment also contributes to shortening an overall length of the lower propelling body. Moreover, as the second propelling shaft is located at a certain distance off the center line of the lower propelling body, and extends along this center line near a side portion of the swivel joint, it can surely prevent the second propelling shaft from interfering with the swivel joint.

Furthermore, another preferred embodiment of claim 6 of the present invention is explained hereinafter. In this embodiment, the second torque transmission mechanism has an offset power transmission mechanism whose input shaft is connected to a rear end of the second propelling shaft, and whose output shaft is disposed near the center line of the lower propelling body. By locating the propelling shaft of the second torque transmission mechanism at a certain distance off the center line of the lower propelling body, preventing the propelling shaft from interfering with the swivel joint located at a center of rotation of the upper revolving body, the propelling shafts are connected to the axles by the offset power transmission mechanism at the place near the center line of the lower propelling body on the top view. Accordingly, it is possible to properly transmit the power to the axles near the center line of the lower propelling body.

Furthermore, another preferred embodiment of claim 7 of the present invention is explained hereinafter. In this embodiment, the offset power transmission mechanism is provided with an input gear installed on the input shaft, an output gear installed on the output shaft and an intermediate gear that meshes with both of the input gears and the output gears. According to this embodiment, as power transmitting can be achieved securely by using three gears from the input shaft to the output shaft, the reliability is improved.

### BRIEF DESCRIPTION OF THE DRAWINGS

Fig. 1 is a top view of a power transmission apparatus of a working vehicle showing an embodiment of the present invention;
Fig. 2 is a side-view of the power transmission apparatus of the working vehicle as shown in Fig. 1;

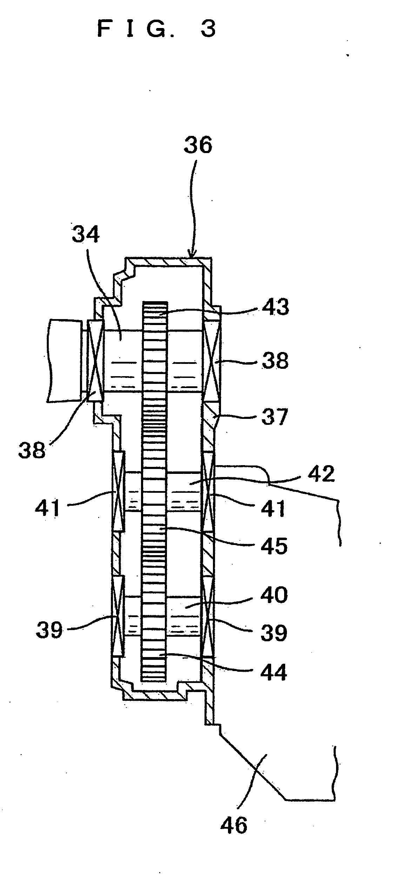

Fig. 3 is a sectional view in the vicinity of an offset gear mechanism as shown in Fig. 1; and
Fig. 4 is a top view of the power transmission apparatus of the conventional working vehicle.

### DETAILED DESCRIPTION OF THE PREFERRED EMBODIMENTS

Hereinafter, based on the drawings, a description is given to preferred embodiments to carry out the present invention.

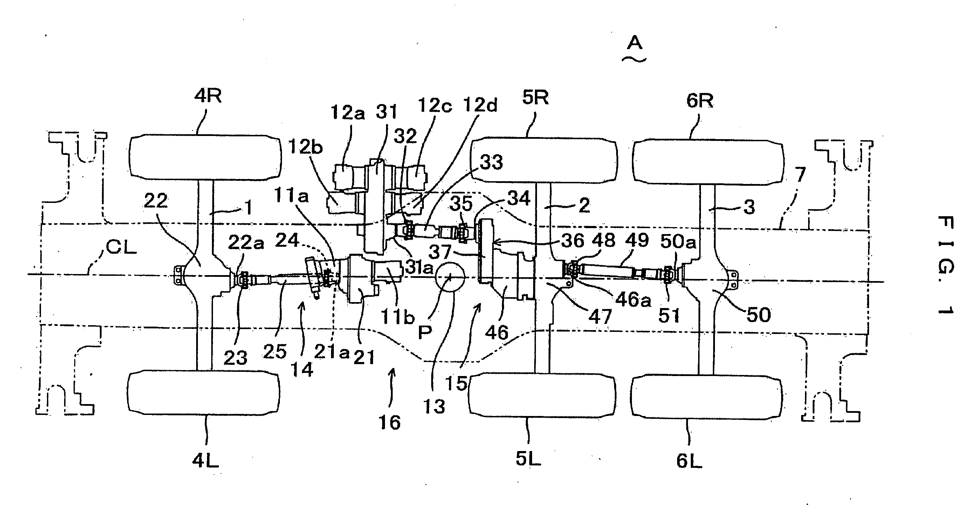

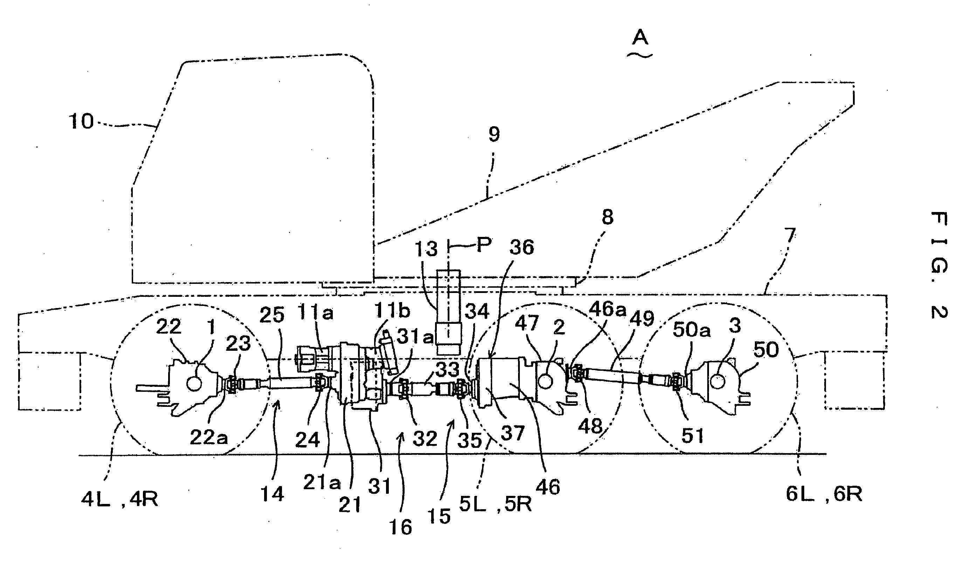

Fig. 1 and Fig. 2 show a general configuration of a power transmission apparatus A of a working vehicle according to one of the embodiments of the present invention. The working vehicle of the present embodiment is a wheel crane. This wheel crane is provided with a lower propelling body 7 with three axles 1, 2 and 3 that have two wheels 4L, 4R, 5L, 5R, 6L and 6R on each axle respectively, in total six wheels. On this lower propelling body 7, an upper revolving body 9 is rotatably mounted by means of a slewing ring gear 8. On this upper revolving body 9, although it is not illustrated, a crane is mounted as a working device. In a front area of the upper revolving body 9, a cab 10 with an operator's seat is provided. In addition, in order to identify three axles described hereinafter, each axle is named, in order from the front end of the vehicle, as a first axle, a second axle and a third axle. Moreover, front wheels mean two wheels 4L and 4R mounted on each right and left of the first axle 1 that is located in the forward position from a center of rotation P of the upper revolving body. Rear wheels mean four wheels 5L, 5R, 6R and 6L mounted on each right and left of two rear axles 2 and 3 (the second and the third axle).

On the aforementioned upper revolving body 9, although they are not illustrated, a power source consisting of an engine and hydraulic pumps driven by the engine are installed as a power transmission apparatus A of a working vehicle. On the aforementioned lower propelling body 7, six hydraulic motors 11a, 11b, 12a, 12b, 12c and 12d are provided to convert the hydraulic pressures from the hydraulic pumps into the torques. At the center of rotation P of the upper revolving body 9, a swivel joint 13 is installed to straddle almost vertically between the upper revolving body 9 and the lower propelling body 7. Although they are not illustrated on the drawings, hydraulic hoses that connect the hydraulic pumps on the revolving body 9 and the hydraulic motors 11a, 11b and 12a - 12d on the lower propelling body 7 are passed through the swivel joint 13. Moreover, electric control cables of the hydraulic motors 11a, 11b and 12a - 12d are also passed through this swivel joint 13.

Both of two hydraulic motors 11a and 11b out of the aforementioned six hydraulic motors 11a, 11b and 12a ~ 12d are connected to a first gearbox 21. This gearbox 21 compounds the torques of both hydraulic motors 11a and 11b, and delivers the output from an output shaft 21a of the gearbox 21. The four hydraulic motors 12a ~ 12d are all connected to a second gearbox 31. This gearbox 31 compounds the torques of each hydraulic motor 12a - 12d and delivers the output from an output shaft 31a of the gearbox 31.

The aforementioned first gearbox 21 and the second gearbox 31 are arranged between the first axle 1 and the second axle 2 on a top view. In addition, these gearboxes 21 and 31 are located near a front portion of the swivel joint 13 and installed in parallel to a lateral direction. In this case of the embodiment, the lateral direction means an overall width direction of the working vehicle. The aforementioned two hydraulic motors 11a and 11b are arranged at the front portion and the rear portion of the gearbox 21 on the top view. The aforementioned four hydraulic motors 12a - 12d are so disposed that two each of four hydraulic motors are located on the front portion and the rear portion of the gearbox 21 respectively on the top view. The output shaft 21a of the first gearbox 21 is located near the center line CL of the lower propelling body 7. The torque of this output shaft 21a is transmitted to two front wheels on the first axle 1, the left and right wheels 4L and 4R, through a first torque transmission mechanism 14. On the other hand, the output shaft 31a of the second gearbox 31 is located at a certain distance off the center line CL toward the right side of the vehicle. The torque of this output shaft 31a is transmitted to four rear wheels on the second axle 2 and third axle 3, the left and right wheels 5L, 5R, 6L and 6R, through a second torque transmission mechanism 15. A torque transmission mechanism 16 is composed of the aforementioned first torque transmission mechanism 14 and the second torque transmission mechanism 15. This torque transmission mechanism 16 is installed along a front-rear line of the lower propelling body 7, and transmits the torque of the hydraulic motors 11a, 11b and 12a - 12d to each axle 1 ~ 3.

The aforementioned first torque transmission mechanism 14 includes an inter-wheel differential gear 22 installed in a middle portion of the first axle 1 and a first propelling shaft 25. This first propelling shaft extends from the front portion to the rear portion almost on the center line CL of the lower propelling body 7 on the top view. Moreover, the front end of this first propelling shaft 25 is connected to the input shaft 22a of the inter-wheel differential gear 22 and the rear end of the first propelling shaft 25 is connected to the output shaft 21a of the aforementioned first gearbox 21 by means of universal joints 23 and 24 respectively. The torque of the output shaft 21a of the first gearbox 21 is transmitted and distributed to the front wheels 4L and 4R mounted on the left and right sides of the first axle 1 by means of the inter-wheel differential gear 22. The first axle 1 is, although it is not illustrated on the drawings, installed on the lower propelling body 7 by means of the suspension devices to cancel relative up-down displacement motions between the first axle 1 and the lower propelling body 7. The hydraulic motors 11a, 11b and the first gear box 21 are fixed on the lower propelling body 7 with mounting material and vibration-proof rubber pieces. In order to cancel relative displacement between the first axle 1 and the gearbox 21, both ends of the first propelling shaft 25 are not only provided with universal joints 23 and 24 between the first axle 1 and the gear box 21, but also provided with spline joints that are not illustrated, so as to allow their extension movements to an axial direction.

The aforementioned second torque transmission mechanism 15 is located at a certain distance off the center line CL of the lower propelling body 7 to the right of the vehicle on the top view, and it is disposed along a right side of the swivel joint 13 and extends along the front―rear line. Moreover, the aforementioned second torque transmission mechanism 15 is provided with a second propelling shaft 33 and an offset power transmission mechanism 36. A front end of the second propelling shaft 33 is connected to the output shaft 31a of the aforementioned second gearbox 31 by means of the universal joint 32, and the rear end of the second propelling shaft 33 is connected to the input shaft 34 of the offset power transmission mechanism 36 by means of the universal joint 35. As shown in Fig, 3, the offset power transmission mechanism 36 contains the input shaft 34, an output shaft 40 and an intermediate shaft 42 inside a housing 37. The input shaft 34 is supported free to rotate by means of a pair of bearings 38 and 38 in the housing 37. The output shaft 40 is located in the housing 37 in parallel with the input shaft 34, at a certain distance off the input shaft 34, and near the center line CL of the lower propelling body 7 on the top view, and the output shaft 40 is supported free to rotate by means of a pair of bearings 39 and 39. The intermediate shaft 42 is located in the housing 37 in parallel with the input shaft 34 and the output shaft 40, and the intermediate shaft 42 is supported at the middle position of the intermediate shaft 42 free to rotate by means of a pair of bearings 41 and 41. On the input shaft 34, an input gear 43 is installed so that it may rotate integrally with the input shaft 34, and on the output shaft 40, an output gear 44 is also installed so that it may rotate integrally with the output shaft 40, and on the intermediate shaft 42, an intermediate gear 45 is also installed so that it may rotate integrally with the intermediate shaft 42. The input gear 43, the output gear 44 and the intermediate gear 45 mesh with each other.

The aforementioned second torque transmission mechanism 15 is further provided with an inter-differential gear 46, an inter-wheel differential gear 47, a third propelling shaft 49 and an inter-wheel differential gear 50. The inter differential gear 46 is connected to the output shaft 40 of the offset power transmission mechanism 36 and transfers its torque to two axles at the rear; in other words, the torque is distributed to the second axle 2 and the third axle 3. The inter-wheel differential gear 47 is installed on the middle portion of the second axle 2 and distributes a torque of the second axle 2 distributed by the inter-differential gear 46 to the rear wheels 5L and 5R on each left and right of the second axle 2. The third propelling shaft 49 is located between the second axle 2 and the third axle 3 on the top view, and the third propelling shaft 49 is disposed along the center line CL of the lower propelling body 7. The front end of the third propelling shaft 49 is connected to the output shaft 46a of the aforementioned inter-differential gear 46 by means of a universal joint 48. The inter-wheel differential gear 50 is located on the middle portion of the third axle 3. An input shaft 50a of the inter-wheel differential gear 50 is connected to a rear end of the third propelling shaft 49 by means of a universal joint 51. The inter-wheel differential gear 50 distributes the torque at the third axle 3 distributed by the inter differential gear 46 and transmitted through the third axle 3 to two rear wheels 6L and 6R on each left and right side of the third axle 3. The second axle 2 and the third axles 3 are, similarly to the first axle 1, installed on the lower propelling body 7 by means of suspension devices, which are not illustrated on the drawings, so as to cancel relative displacement for up and down motions of the lower propelling body 7. The hydraulic motors 12a - 12d and the second gearbox 31 are fixed on the lower propelling body 7 with those mounting material and vibration-proof rubber pieces which are not illustrated on the drawings. Moreover, both the second and the third propelling shafts 33, 49 are, similarly to the first propelling shaft 25, provided with couplings such as a spline joint so as to allow their extension movements to an axial direction.

Next, function and effect of the aforementioned embodiment is explained hereinafter. As viewed on the top view, the torques of two hydraulic motors 11a and 11b out of six hydraulic motors 11a, 11b and 12a - 12d arranged near the swivel joint 13 are transmitted to two front wheels 4L and 4R mounted on each right and left side of the first axle 1 through the first gearbox 21 and the first torque transmission mechanism 14. Furthermore, the torques of four hydraulic motors 12a - 12d are transmitted to four rear wheels, 5L, 5R, 6L and 6R mounted on each left and right of the second axle 2 and the third axle 3 respectively through the second gearbox 31 and the second torque transmission mechanism 15. Accordingly, two front wheels 4L and 4R, and four rear wheels 5L, 5R, 6L and 6R are driven to rotate, so that the lower propelling body 7 may travel, and so that the working vehicle may travel. In this working vehicle, as those hydraulic motors 11a, 11b and 12a ~ 12d and the gearboxes 21 and 31 which are heavy components of the lower propelling body 7 are located near the swivel joint 13 near the center of the vehicle, the yaw moment of the lower propelling body or the working vehicle when it is in a steering motion becomes small so as to result in improving steering characteristics of the working vehicle.

In addition, the hydraulic pumps mounted on the upper revolving body 9 are connected to the aforementioned hydraulic motors 11a. 11b and 12a - 12d with the hoses through the swivel joint 13, and a control panel provided somewhere in an operator cab 10 on the upper revolving body 9 is also connected to the aforementioned hydraulic motors 11a, 11b and 12a ~ 12d with the electric cables. In this case, as each hydraulic motor 11a, 11b and 12a - 12d is located near the swivel joint 13 on the top view, the length of the hydraulic hoses and the electric cables installed on the lower propelling body 7 can be as shortened as possible. In addition, as each hydraulic motor 11a, 11b and 12a - 12d is fixed on the lower propelling body 7, so the hydraulic hoses and the electric cables connected to each hydraulic motor 11a, 11b and 12a - 12d do not suffer from frequent bending motions caused by extension movements of the suspension devices, unlike in the conventional case whose hydraulic motors 11a. 11b and 12a - 12d are mounted on each axle. Therefore, the breaking of the electric cables and bursting of the hydraulic hoses can be prevented.

Furthermore, because the aforementioned two gearboxes 21 and 31 are disposed, in parallel, near the front portion of the swivel joint 13 where there is relatively wide space, and are disposed between the first axle 1 and the second axle 2 in the middle portion of the lower propelling body 7, arrangement and installation of both gearboxes 21 and 31 and those six hydraulic motors connected integrally with the gearboxes are easy. Moreover, in the present embodiment, as it is not necessary to enlarge an overall length of the lower propelling body 7 in order to procure a peculiar space for the arrangement, it contributes to shortening the overall length of the lower propelling body 7.

In addition, in the aforementioned two torque transmission mechanisms 14 and 15, the first torque transmission mechanism 14 is so arranged that its propelling shaft 25 extends almost along the front-rear center line CL of the lower propelling body 7 on the top view, while the second torque transmission mechanism 15 is so arranged that its propelling shaft 33 locates at a certain distance off the center line CL toward the right side of the lower propelling body 7 and extends along the front-rear center line CL on the top view, so that it may avoid interference with the swivel joint 13. Furthermore, the output shaft 40 of the second torque transmission mechanism 15 is connected to the inter-wheel differential gear 47 at the side of the second axle 2 and near the center line of the lower propelling body 7 on the top view by means of the offset power transmission mechanism 36. Accordingly, in this embodiment of the present invention, avoiding the interference with the swivel joint 13, it is feasible to properly transmit the power to each axle 1 - 3 on the line close to the center line CL of the lower propelling body 7.

Especially, in the aforementioned offset power transmission mechanism 36, power transmitting from the input shaft 34 to the output shaft 40 is processed by means of the three gears 43 - 45. Therefore, in the embodiment of the present invention, the power transmitting can be surely performed, and the embodiment can contribute to improvement of reliability.

Further, it should be noted that the present invention is not limited to the above mentioned embodiment, but also includes a variety of other embodiments. For example, it may be possible to arrange one hydraulic motor in a space near the swivel joint 13 of the lower propelling body 7 on the top view, in other word near the center of rotation P of the upper revolving body 9, in order to transmit and distribute the torque of the hydraulic motor to the front wheels and the rear wheels respectively by means of the differential gears. It may be also possible to arrange a plurality of hydraulic motors in a space close to the swivel joint 13 of the lower propelling body 7 and, after the torque of these hydraulic motors is compounded, the compounded torque is transmitted and distributed to the front wheels and the rear wheels respectively by means of the differential gears.

Further, in the aforementioned embodiment, six hydraulic motors 11a, 11b and 12a - 12d and two gearboxes 21 and 31 are arranged near the front of the swivel joint 13 respectively on the top view. However, in the present invention, it may be also possible to separately arrange two gearboxes 21, 31 and one or a plurality of hydraulic motors connected to the gearboxes in the front space and the rear space near the swivel joint 13 of the lower propelling body 7 on the top view.

Furthermore, in the aforementioned embodiment, the explanation is made referring to the working vehicle whose lower propelling body 7 is provided with two front wheels 4R and 4L on each left and right end of the first axle, and four wheels 5L, 5R, 6L and 6R on each left and right end of the second and third axle respectively. However, the present invention is applied not only to the lower propelling body provided with the aforementioned number of wheels, but also to a lower propelling body provided with one or more than two wheels on each left and right end of more than two axles.

## Claims

1. A power transmission apparatus of a working vehicle, comprising:
a lower propelling body (7) having at least two axles (1, 2) on which at least four wheels (4L, 4R, 5L and 5R) are mounted, and an upper revolving body (9) rotatably mounted on the lower propelling body (7),
an engine and a hydraulic pump driven by said engine are provided on said upper revolving body (9),
a swivel joint (13) disposed on a center of rotation (P) of said upper revolving body (9),
a hydraulic motor (11a, 11b, 12a and 12b) that converts hydraulic pressure from said hydraulic pump into torques is disposed in the area in the front and/or rear of said swivel joint (13) of said lower propelling body (7) on a top view, and
a torque transmission mechanism (14,15) that transmits torque from said hydraulic motor to said axles (1, 2) is disposed along a front and rear line of said lower propelling body (7),
wherein said hydraulic motors (11a, 11b, 12a and 12b) are plural, said torques of said hydraulic motors are combined by two gearboxes (21, 31) respectively and are outputted from each output shaft (21a, 31a) of said gearboxes respectively,
**characterized in that**
said gearboxes (21, 31) are installed in the area of said swivel joint (13) of said lower propelling body (7) in parallel to a lateral direction.

2. The power transmission apparatus of the working vehicle according to claim 1, wherein
said torque transmission mechanism (14, 15) consists of a first torque transmission mechanism (14) that transmits torque from one (21a) of said output shafts of one of said gearboxes (21) to said front axle (1), and a second torque transmission mechanism (15) that transmits torque from the other (31a) of said output shafts of the other of said gearboxes (31) to said rear axle (2, 3).

3. The power transmission apparatus of the working vehicle according to claim 2, wherein
said rear axles (2, 3) are plural, and
said lower propelling body (7) is provided with said front axle (1) which has at least two front wheels (4L. 4R) on each left and right end, and is provided with said rear axles (2, 3) that have at least two rear wheels on each right and left end, in total at least four wheels (5L, 5R, 6L and 6R), and
said second torque transmission mechanism (15) is provided with a differential gear (46) that distributes said torques to said rear axles (2, 3).

4. The power transmission apparatus of the working vehicle according to claim 3, wherein
said plurality of hydraulic motors (11a, 11b, 12a, 12b, 12c and 12d) and said two gearboxes (21 and 31) are disposed between said front axle (1) for the front wheels and said rear axles (2) for the rear wheels.

5. The power transmission apparatus of the working vehicle according to claim 3, wherein
said two gearboxes (21, 31) are disposed in parallel in the area of a front portion of said swivel joint (13) of said lower propelling body (7),
said first torque transmission mechanism (14) is provided with a first propelling shaft (25) that extends almost along a front-rear center line (CL) of said lower propelling body (7) on the top view, and
said second torque transmission mechanism (15) is provided with a second propelling shaft (33) that is located at a certain distance off said front-rear center line (CL) of said lower propelling body (7) on the top view, said second propelling shaft (33) extending along said front-rear center line (CL) and located near a side portion of said swivel joint (13).

6. The power transmission apparatus of the working vehicle according to claim 5, wherein
said second torque transmission mechanism (15) has an offset power transmission mechanism (36) whose input shaft (34) is connected to a rear end of said second propelling shaft (33), and whose output shaft (40) is disposed near said center line (CL) of said lower propelling body (7).

7. The power transmission apparatus of the working vehicle according to claim 6, wherein
said offset power transmission mechanism (36) is provided with an input gear (43) installed on said input shaft (34), an output gear (44) installed on said output shaft (40) and an intermediate gear (45) that meshes with both of said input gear (43) and said output gear (44).

## Patentansprüche

1. Kraftübertragungsvorrichtung für ein Arbeitsfahrzeug, das Folgendes aufweist:
einen unteren Antriebskörper (7) mit wenigstens zwei Achsen (1, 2), an denen wenigstens vier Räder (4L, 4R, 5L und 5R) montiert sind, und einen oberen Drehkörper (9), der drehbar an dem unteren Antriebskörper (7) montiert ist,
eine Maschine und eine hydraulische Pumpe, die durch die Maschine angetrieben ist, die an dem oberen Drehkörper (9) vorgesehen sind,
ein Drehgelenk (13), das an einer Drehmitte (P) des oberen Drehkörpers (9) angeordnet ist,
wobei ein Hydraulikmotor (11a, 11b, 12a und 12b), der den Hydraulikdruck von der Hydraulikpumpe in Drehmomente umwandelt, in dem Bereich vor und/oder hinter dem Drehgelenk (13) des oberen Drehkörpers (7) in einer Draufsicht angeordnet ist, und
ein Drehmomentübertragungsmechanismus (14, 15), der Drehmoment von dem Hydraulikmotor an die Achsen (1, 2) überträgt, entlang einer Front- und Hecklinie des unteren Antriebskörpers (7) angeordnet ist,
wobei die Hydraulikmotoren (11a, 11b, 12a und 12b) mehrere sind, die Drehmomente der Hydraulikmotoren mit Hinblick auf zwei Getriebekästen (21, 31) kombiniert sind und von jeder Ausgangswelle (21a, 31a) mit Hinblick auf die Getriebekästen ausgegeben sind,
**dadurch gekennzeichnet, dass**
die Getriebekästen (21, 31) in dem Bereich des Drehgelenks (13) des unteren Antriebskörpers (7) parallel zu einer lateralen Richtung installiert sind.

2. Kraftübertragungsvorrichtung für das Arbeitsfahrzeug nach Anspruch 1, wobei
der Drehmomentübertragungsmechanismus (14, 15) aus einem ersten Drehmomentübertragungsmechanismus (14), der Drehmoment von einer (21a) der Ausgangswellen von einem der Getriebekästen (21) an die Vorderachse (1) überträgt, und einem zweiten Drehmomentübertragungsmechanismus (15) besteht, der Drehmoment von der anderen (31a) der Ausgangswellen des anderen der Getriebekästen (31) an die Hinterachse (2, 3) überträgt.

3. Kraftübertragungsgerät des Arbeitsfahrzeugs nach Anspruch 2, wobei
die Hinterachsen (2, 3) mehrere sind, und
der untere Antriebskörper (7) mit der Vorderachse (1) versehen ist, die wenigstens zwei Vorderräder (4L, 4R) an jeder linken und rechten Seite aufweist, und mit den hinteren Achsen (2, 3) versehen ist, die wenigstens zwei Hinterräder an jeder rechten und linken Seite, zusammen wenigstens vier Räder (5L, 5R, 6L und 6R), aufweisen, und
der zweite Drehmomentübertragungsmechanismus (15) mit einem Differenzialgetriebe (46) versehen ist, das die Drehmomente an die hinteren Achsen (2, 3) verteilt.

4. Kraftübertragungsvorrichtung für das Arbeitsfahrzeug nach Anspruch 3, wobei
die Vielzahl von Hydraulikmotoren (11a, 11b, 12a, 12b, 12c und 12d) und die zwei Getriebekästen (21 und 31) zwischen der Vorderachse (1) für die Vorderräder und den Hinterachsen (2) für die Hinterräder angeordnet sind.

5. Kraftübertragungsvorrichtung für das Arbeitsfahrzeug nach Anspruch 3, wobei
die zwei Getriebekästen (21, 31) parallel in dem Bereich eines vorderen Abschnitts des Drehgelenks (13) des unteren Antriebskörpers (7) angeordnet sind,
der erste Drehmomentübertragungsmechanismus (14) mit einer ersten Antriebswelle (25) versehen ist, die sich ungefähr entlang einer Front-Heckmittellinie (CL) des unteren Antriebskörpers (7) in der Draufsicht erstreckt, und
der zweite Drehmomentübertragungsmechanismus (15) mit einer zweiten Antriebswelle (33) versehen ist, die sich in einem bestimmten Abstand entfernt von der Front-Heckmittellinie (CL) des unteren Antriebskörpers (7) in der Draufsicht befindet, wobei sich die zweite Antriebswelle (33) entlang der Front-Heckmittelinie (CL) erstreckt und sich nahe einem seitlichen Abschnitt des Drehgelenks (13) befindet.

6. Kraftübertragungsvorrichtung des Arbeitsfahrzeugs nach Anspruch 5, wobei
der zweite Drehmomentübertragungsmechanismus (15) einen Versatzkraftübertragungsmechanismus (36) aufweist, dessen Eingangswelle (34) mit einem hinterem Ende der zweiten Antriebswelle (33) verbunden ist und dessen Ausgangswelle (40) nahe der Mittellinie (CL) des unteren Antriebskörpers (7) angeordnet ist.

7. Kraftübertragungsvorrichtung für das Arbeitsfahrzeug nach Anspruch 6, wobei
der Versatzkraftübertragungsmechanismus (36) mit einem Eingangszahnrad (43), das an der Eingangswelle (34) installiert ist, einem Ausgangszahnrad (44), das an der Ausgangswelle (40) installiert ist, und einem Zwischenzahnrad (45) versehen ist, das mit sowohl dem Eingangszahnrad (43) als auch dem Ausgangszahnrad (44) verzahnt ist.

## Revendications

1. Appareil de transmission de puissance d'un véhicule de travail, comprenant :
un corps de propulsion inférieur (7) ayant au moins deux essieux (1, 2) sur lesquels au moins quatre roues (4L, 4R, 5L et 5R) sont montées, et un corps (9) de révolution supérieur monté en rotation sur le corps de propulsion inférieur (7),
un moteur et une pompe hydraulique entraînée par ledit moteur sont pourvus sur ledit corps de révolution supérieur (9) ,
un joint articulé (13) disposé sur un centre de rotation (P) dudit corps de révolution supérieur (9),
un moteur hydraulique (11a, 11b, 12a et 12b) qui convertit une pression hydraulique de ladite pompe hydraulique en couples est disposé dans la zone dans la partie avant et/ou arrière dudit joint articulé (13) dudit corps de propulsion inférieur (7) sur une vue de dessus, et
un mécanisme (14, 15) de transmission de couple qui transmet un couple dudit moteur hydraulique auxdits essieux (1, 2) est disposé le long d'une ligne avant et arrière dudit corps de propulsion inférieur (7),
où lesdits moteurs hydrauliques (11a, 11b, 12a et 12b) sont multiples, lesdits couples desdits moteurs hydrauliques sont combinés par deux boîtes de vitesses (21, 31) respectivement et sont délivrés en sortie de chaque arbre de sortie (21a, 31a) desdites boîtes de vitesses respectivement,
**caractérisé en ce que**
lesdits boîtes de vitesses (21, 31) sont installées dans la zone dudit joint articulé (13) dudit corps de propulsion inférieur (7) parallèlement à une direction latérale.

2. Appareil de transmission de puissance du véhicule de travail selon la revendication 1, dans lequel
ledit mécanisme (14, 15) de transmission de couple est composé d'un premier mécanisme (14) de transmission de couple qui transmet un couple de l'un (21a) desdits arbres de sortie de l'une desdites boîtes de vitesses (21) audit essieu avant (1), et un deuxième mécanisme (15) de transmission de couple qui transmet un couple de l'autre (31a) desdits arbres de sortie de l'autre desdites boîtes de vitesses (31) audit essieu arrière (2, 3).

3. Appareil de transmission de puissance du véhicule de travail selon la revendication 2, dans lequel
lesdits essieux arrières (2, 3) sont multiples, et ledit corps de propulsion inférieur (7) est doté dudit essieu avant (1) qui a au moins deux roues avant (4L, 4R) sur chaque extrémité gauche et droite, et est doté desdits essieux arrière (2, 3) qui ont au moins deux roues arrière sur chaque extrémité droite et gauche, au total au moins quatre roues (5L, 5R, 6L et 6R), et
ledit deuxième mécanisme (15) de transmission de couple est doté d'un engrenage différentiel (46) qui distribue lesdits couples auxdits essieux arrière (2, 3).

4. Appareil de transmission de puissance du véhicule de travail selon la revendication 3, dans lequel
ladite pluralité de moteurs hydrauliques (11a, 11b, 12a, 12b, 12c et 12d) et lesdites deux boîtes de vitesses (21 et 31) sont disposés entre ledit essieu avant (1) pour les roues avant et lesdits essieux arrière (2) pour les roues arrière.

5. Appareil de transmission de puissance du véhicule de travail selon la revendication 3, dans lequel
lesdites deux boîtes de vitesses (21, 31) sont disposées en parallèle dans la zone d'une partie avant dudit joint articulé (13) dudit corps de propulsion inférieur (7),
ledit premier mécanisme (14) de transmission de couple est doté d'un premier arbre de propulsion (25) qui s'étend presque le long d'une ligne médiane avant-arrière (CL) dudit corps de propulsion inférieur (7) sur la vue de dessus, et
ledit deuxième mécanisme (15) de transmission de couple est doté d'un deuxième arbre de propulsion (33) qui est situé à une certaine distance loin de ladite ligne médiane avant-arrière (CL) dudit corps de propulsion inférieur (7) sur la vue de dessus, ledit deuxième arbre de propulsion (33) s'étendant le long de ladite ligne médiane avant-arrière (CL) et situé près d'une partie latérale dudit joint articulé (13).

6. Appareil de transmission de puissance du véhicule de travail selon la revendication 5, dans lequel
ledit deuxième mécanisme (15) de transmission de couple a un mécanisme (36) de transmission de puissance de décalage dont l'arbre d'entrée (34) est relié à une extrémité arrière dudit deuxième arbre de propulsion (33), et dont l'arbre de sortie (40) est disposé près de ladite ligne médiane (CL) dudit corps de propulsion inférieur (7).

7. Appareil de transmission de puissance du véhicule de travail selon la revendication 6, dans lequel
ledit mécanisme (36) de transmission de puissance de décalage est doté d'un engrenage d'entrée (43) installé sur ledit arbre d'entrée (34), d'un engrenage de sortie (44) installé sur ledit arbre de sortie (40) et d'un engrenage intermédiaire (45) qui s'engrène avec ledit engrenage d'entrée (43) et ledit engrenage de sortie (44).
